# EUROPEAN PATENT APPLICATION

(11) **EP 4 525 099 A2**
(43) Date of publication of application: **19.03.2025**
(21) Application number: 23731725.0
(22) Date of filing: 11.05.2023
(51) Int. Cl.: H01M 4/96

(54) **ELECTROCHEMICAL CELL FOR ION POWER PLANT**

(30) Priority: 12.05.2022 ES 202200038; 26.07.2022 ES 202200064
(71) Applicant: Santana Ramirez, Alberto Andres, 35229 Las Palmas (ES)
(72) Inventor: Santana Ramirez, Alberto Andres, 35229 Las Palmas (ES)
(74) Representative: Pons
(86) International application number: PCT/ES2023/070301
(87) International publication number: WO 2023/218112

(57) **Abstract**

The invention relates to an electrochemical cell (1) for an ion power plant, adapted to tubular structures, comprising two or more electrodes, with an anode (3) and a cathode (4), two terminals (2), connected to the electrodes, intended to be connected to other electrochemical cells (1), an anode-cathode separator (6), located between the anode (3) and the cathode (4) of each of the electrodes, isolating them, an electrical connection (9) between the anode (3) and cathode (4), which passes through the anode-cathode separator (6), and electrode separators (7), arranged between the electrodes, electrically isolating them, and allowing the electrolyte to pass between the electrodes, wherein the electrodes can be rectangular or disc-shaped.

## Description

### OBJECT OF THE INVENTION

The object of the present invention is an electrochemical cell that is adaptable to tubular structures for an ion power plant which produces a significant voltage increase. Electrodes of electrochemical cells ensure that a circulating electrolyte maintains equal kinetics at all the interfaces thereof, in addition to regulating the distance between the anodes and cathodes as the anode wears due to corrosion. Moreover, they facilitate the electrode exchange process to replace the anode, given that the electrodes can be easily opened and removed.

### BACKGROUND OF THE INVENTION

In electricity generation, the energy generated by the Volta effect is known, which is based on the fact that a potential difference always occurs on the contact surface of two different metals, which gives rise to charge separation. The Volta effect is established between the metals in such a way that one of them has a positive charge and the other has an equivalent negative charge.

The operation of voltaic batteries, or primary batteries, and common batteries is based on the Volta effect, generating electricity from a process known as the oxidation-reduction process. Any chemical reaction in which one or more electrons are transferred between reactants causing a change in the oxidation states thereof is known as an oxidation-reduction reaction.

In particular, voltaic batteries are made up of intercalated zinc and copper discs in which the flow of electrons from an anode, formed by a reducing substance (which oxidises), to the cathode, formed by an oxidising substance (which is reduced), is used to generate electricity. The problem with these types of batteries is that they have a very limited lifespan.

On the other hand, a galvanic cell or battery is essentially a tin that acts as a cathode, the content of which is a paste of chemical products separated by a membrane, the purpose of which is to temporarily keep the cathode and anode depolarised, producing a flow of electrons called electric current.

This phenomenon is called electrochemical reaction, and it ends once the possible chemical reactions of the chemicals that make up said paste have been used up inside the cell separated by a membrane, finally polarising the electrodes in the short term, the process being progressively controlled by the slowest stage according to the Tafel equation, which relates the rate of an electrochemical reaction to the overpotential. Specifically, the Tafel equation describes how electric current through an electrode depends on the voltage difference between the electrode and the electrolyte for a simple, unimolecular redox reaction.

In view of the previously mentioned points, the limited useful life of a galvanic cell or battery ends when the voltage drops, and consequently, from that point on, the same does not produce any more usable electrical current.

Once the possible chemical reactions of the electrolytic paste have been used up, the galvanic cell or battery becomes useless, and thus the entire assembly is discarded, including the anodic part, with all the metallic energy thereof, and the cathodic part, which causes long-term damage to the environment, contaminating aquifers, especially cells with lead and mercury inside.

In turn, an ion power plant (ES1158584U) which consists of a linkable modular installation with limitless electrical power, wherein ionic reactions are carried out to generate electrical energy with basic elements such as water and dissolved sodium chloride, as found in the seas and oceans in a natural state, is known in the state of the art.

The operation of the ion power plant is based on the use of two elements located inside a cell for electricity generation, being at least the metallic anode, both being submerged in the same electrolyte without membranes separating said elements, one of the submerged elements acting as an active or anodic end and the other as a noble or cathodic end.

### DESCRIPTION OF THE INVENTION

The object of the present invention is an electrochemical cell for an ion power plant, such as the one described in the state of the art, which allows the same to be adapted to a tubular structure, such as a pipe, for example PVC pipes or hydraulic pipes.

In particular, the electrochemical cell of the invention comprises electrodes, the electrochemical cell being intercalated in a closed circuit through which an electrolyte flows. The electrolyte is preferably seawater or water and common salt.

Specifically, the electrodes of the electrochemical cell are an interconnected anode and cathode without the use of separating membranes and using a single aqueous electrolyte, such as seawater. The cell also comprises terminals, connected to the electrodes, which allow several electrochemical cells to be connected to each other, preferably in series.

The cell allows the voltage thereof to be increased depending on the number of electrodes used inside the same in order to increase electrical efficiency and electromotive force within a single unit with the same electrolyte, with numerous cathodes and anodes able to be placed in the same unit so that it becomes a multi-voltaic cell.

Furthermore, the electrochemical cell also comprises anode-cathode separators, located between the anode and the cathode of each of the electrodes, separating them. The anode-cathode separators allow electrical resistance to be increased and, consequently, lead to the loss of current due to the reduction of the conductivity of the electrolyte, preventing the electrodes from short-circuiting, enabling the current to go from the first negative electrode of the cell to the last positive electrode of the same, the only conductive electrical medium between the two positive and negative terminals at the ends being the electrolyte, which circulates through the interface of the electrodes inside the cell with an inlet and outlet.

In addition, to guarantee electrical connection between the anode and cathode of each of the electrodes, the cell comprises an electrical connection between the anode and the cathode, which passes through the anode-cathode separator, connecting both elements.

Additionally, the cell comprises electrode separators, arranged between electrodes, which electrically isolate them from each other, but allow the electrolyte to pass through.

In one embodiment of the invention, the electrodes, specifically the anodes and the cathodes, are rectangular, with two long sides and two short sides, arranged so that the long sides are parallel to the flow of the electrolyte.

In an alternative embodiment of the invention, the anodes and cathodes are disc-shaped. The discs are positioned perpendicular to the flow of the electrolyte. In addition, the anode-cathode separators are also disc-shaped and comprise an orifice through which the electrolyte can flow, with a flow perpendicular to the surface of the electrodes.

In one aspect of the invention, when the electrochemical cell is the disc-type, it may additionally comprise a cylindrical casing, in which the electrodes are arranged parallel to each other.

The cylindrical casing comprises an electrolyte inlet and an electrolyte outlet. In addition, the electrochemical cell additionally comprises a compaction element, such as a spring, which keeps the electrodes close to each other. In this way, the electrolyte flows in a forced way through the electrode interface, the electrodes being pressed against each other, but separated by the electrode separators.

For a better understanding of the invention, it is worth recalling that the physical property between aligned metals was discovered in 1799 by Alessandro Giuseppe Antonio Anastasio Volta, whose surname forms the basis for the term volt in the international system of units.

The electrochemical cell, object of the present invention, uses part of said physical principle, although Volta's original model did not work when submerged in an electrolyte because the electrodes would short-circuit, and furthermore, the hydrogen from the electronic transfer would accumulate in the anodes, which would almost instantly polarise.

The tubular cell for an ion power plant does not polarise by the action of the kinetics of the electrolyte on the surface of the electrodes, and the electrodes thereof do not short-circuit by the action of the electrode separators and the anode-cathode separators.

The electrochemical cell, in addition to being able to work with metallic cathodes and anodes, can work with other compounds, mainly carbon atoms.

The physical property developed by this invention allows the cells to be inserted inside a pipe and, in turn, connected in series, in a closed circuit, to simplify the recirculation of the electrolyte with a single pump and easily increase the voltage to industrial ranges to use DC-AC power inverters currently used in solar and wind farms (>300 <1500 volts).

This technology, which generates current by favouring oxidation of the anodes, preferably aluminium, can also work by galvanisation, as an electric accumulator, since they can be reversibly charged and discharged when stored in the porous structure of the carbon nanotubes that preferably make up the cathode ions thereof in the Al-3 anion state (cathode galvanisation) to reversibly release the charge in the opposite direction on demand and return to the ion state once the electronic charge has been released, reducing said anions now in the ion state on the anodic surface.

The cell can also function as a chlorinator cell by supplying current during the charging processes when part of the composition of the electrolyte is sodium chloride.

Another particular feature of the cell is that ionic membranes are not used, so there is no possibility of the formation of oxide dendrites in the ionic membrane which produce short circuits between the anode and the cathode, which is what currently make aluminium accumulator batteries impossible to use due to the specific structure of the atoms of this metal, and thus the durability of the cell is not limited by the ionic membranes if one wants use it reversibly as an accumulator instead of as an electrical generator.

The cell reduces the amperage of the series when the voltage increases and, consequently, reduces the section of the bridge circuits necessary between the cell terminals.

### DESCRIPTION OF THE DRAWINGS

To complement the description made herein and for the purpose of helping the features of the invention according to a preferred practical exemplary embodiment thereof to be better understood, a set of drawings is attached as an integral part of said description in which the following is depicted in an illustrative and non-limiting manner:
Figure 1 shows a view of the electrochemical cell integrated inside a pipe through which the electrolyte flows.
Figure 2 shows a schematic elevation view of an electrode, the anode represented on the left and the cathode on the right, separated by an anode-cathode separator.
Figure 3 shows a schematic representation of the cross section an electrode, the anode represented on the left and the cathode on the right, separated by central isolating separators.
Figure 4 shows a perspective view of the cell body.
Figure 5 shows an upper cross section of the cell with disc electrodes.
Figure 6 shows a lower cross section of the cell with disc electrodes.
Figure 7 shows a cross section of a disc electrode.
Figure 8 shows a lateral cross section of the electrochemical cell with disc electrodes.

### PREFERRED EMBODIMENT OF THE INVENTION

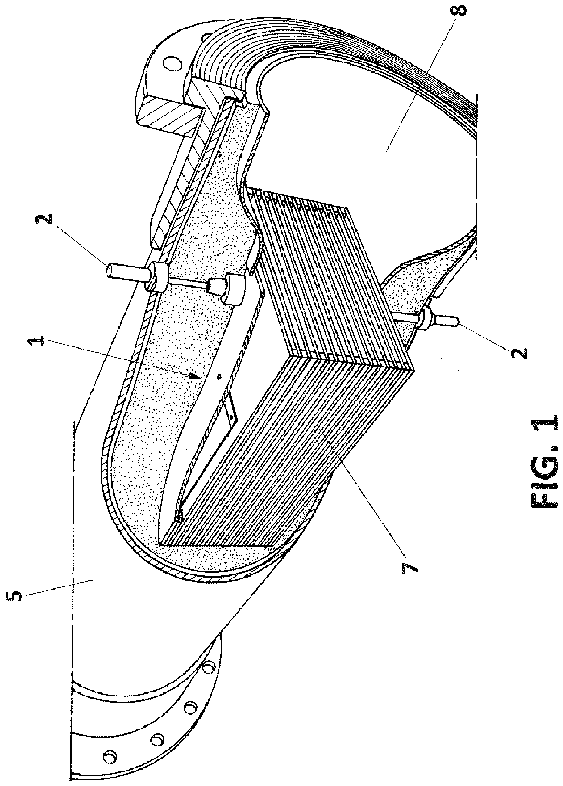

A preferred embodiment of the electrochemical cell (1) for an ion power plant, object of the present invention, is described below with the help of figures 1 to 8.

The electrochemical cell (1), which is shown in figure 1 inserted in a closed circuit through which an electrolyte flows, comprises two or more electrodes.

Each of the electrodes of the electrochemical cell (1) comprises an anode (3) and a cathode (4) interconnected without using separating membranes and using a single aqueous electrolyte, such as seawater or saltwater. The electrochemical cell (1) further comprises terminals (2), represented in figure 1, connected to the electrodes, which allow several electrochemical cells (1) to be connected to each other, preferably in series.

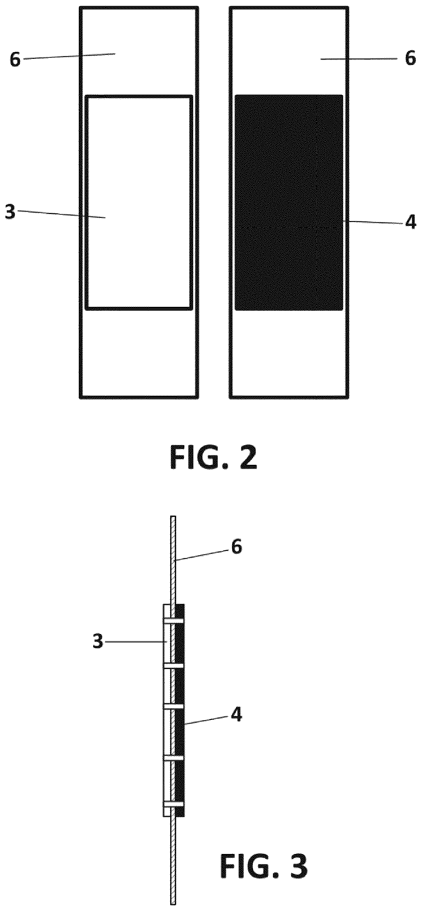

As reflected in figure 2, the electrochemical cell (1) further comprises anode-cathode separators (6), located between the anode (3) and the cathode (4) of each of the electrodes, separating them.

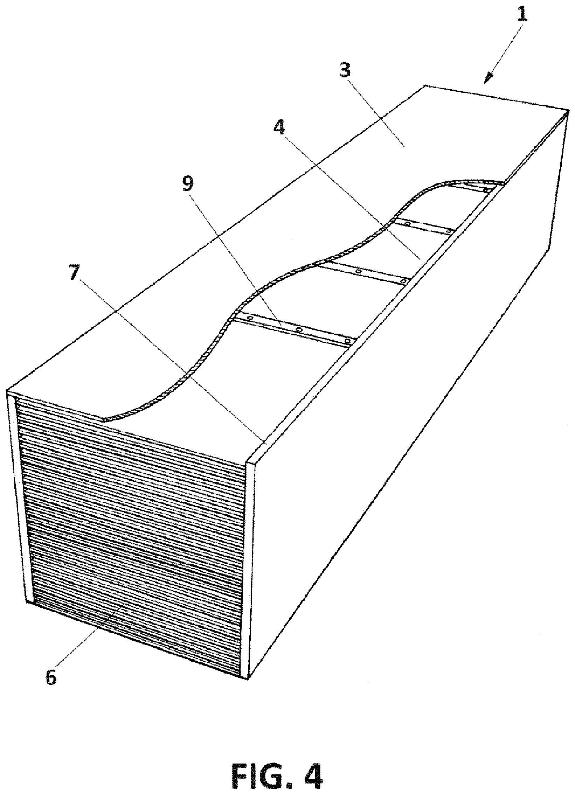

In addition, to guarantee electrical connection (9) between the anode (3) and cathode (4) of each of the electrodes, the electrochemical cell (1) comprises, as shown in figure 4, an electrical connection (9) between the anode (3) and cathode (4), which passes through the anode-cathode separator (6), connecting both elements. The electrical connection (9) can be a rivet, a nail or a screw, for example.

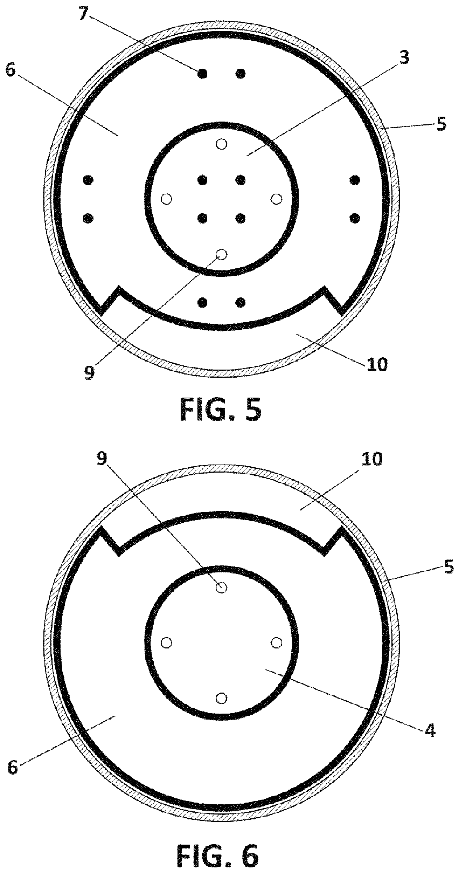

Additionally, the electrochemical cell (1) comprises electrode separators (7), shown in figures 1 and 5, arranged between electrodes, which electrically isolate them, but allow the electrolyte to pass between them.

In one embodiment of the invention the electrodes, as shown in figure 1, the anodes (3) and the cathodes (4) are rectangular, with two long sides and two short sides, arranged such that the long sides are parallel to the flow of the electrolyte.

In an alternative embodiment of the invention, shown in figures 5 to 8, the anodes (3) and cathodes (4) are disc-shaped. The discs are positioned perpendicular to the flow of the electrolyte.

Figure 5 represents a top plan view of the outer body of the open electrochemical cell (1), in the case when the electrodes are disc-shaped, wherein the pipe (1) is represented. As previously described, between the anode (3) and the cathode (4) of each electrode there is an anode-cathode separator (6), which electrically isolates them. In addition, as shown in figure 5, the electrochemical cell (1) comprises electrode separators (7) which, in this case are plastic separator pins so that the electrodes do not collide with each other.

Furthermore, the anode-cathode separators (6) comprise an orifice through which the electrolyte can flow, with a flow perpendicular to the surface of the electrodes.

Figure 5 shows a top view of the electrochemical cell (1) in which the anode (3) is shown electrically joined to the cathode (4), which is reflected in figure 6, by an electrical connection (9) that passes through the anode-cathode separator (6).

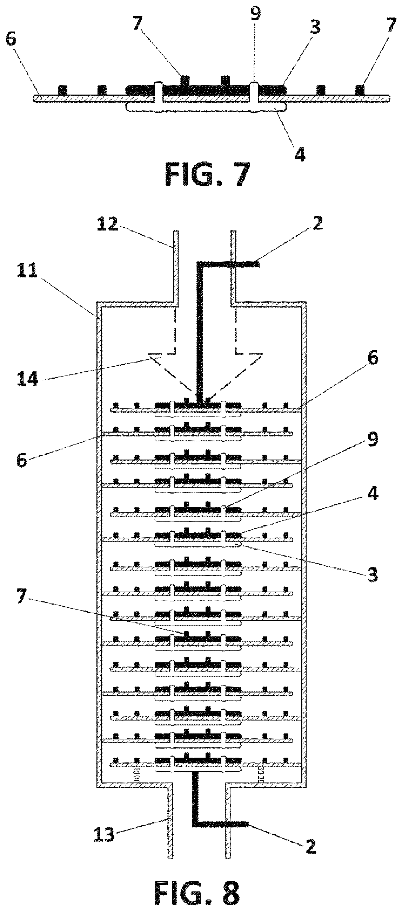

Figure 7 represents a side view of an electrode of a disc-shaped electrochemical cell (1). In one aspect of the invention, shown in detail in figure 8, when the electrochemical cell (1) is the disc-type, it may additionally comprise a cylindrical casing (11), in which the electrodes are arranged parallel to each other.

The cylindrical casing (11) comprises an electrolyte inlet (12) and an electrolyte outlet (13). In addition, the electrochemical cell (1) additionally comprises a compaction element (14), such as a spring, which keeps the electrodes close to each other. In this way, the electrolyte flows forced through the electrode interface, the electrodes being pressed against each other, but separated by the electrode separators (7).

In one aspect of the invention, the cathode (4) is a carbon nanotube composite according to patent document EP3795536. Specifically, the cathode (4) comprises unidirectional fibres of carbon nanotubes, fibreglass, woven into nanotube fibres, and a microporous insulating polymer sheathing, located around the carbon nanotube fibres that tubularly encapsulate said fibres.

In addition, the electrical connection (9) between the anode and cathode is preferably stainless steel.

## Claims

1. An electrochemical cell (1) for an ion power plant, intended to work in a tubular structure through which an electrolyte circulates, the electrochemical cell (1) comprising:
- two or more electrodes, comprising an anode (3) and a cathode (4),
- two terminals (2), connected to the electrodes, intended to be connected to other electrochemical cells (1),
the electrochemical cell being **characterised in that** it further comprises:
- an anode-cathode separator (6), located between the anode (3) and the cathode (4) of each of the electrodes, isolating them,
- an electrical connection (9) between the anode (3) and cathode (4), which passes through the anode-cathode separator (6),
- electrode separators (7), arranged between the electrodes, electrically isolating them, and allowing the electrolyte to pass between the electrodes.

2. The electrochemical cell (1) of claim 1, wherein the cathode (4) is a carbon nanotube composite comprising unidirectional carbon nanotube fibres, fibreglass, woven into the unidirectional carbon nanotube fibres and a microporous insulating polymer sheathing, located around the carbon nanotube fibres.

3. The electrochemical cell (1) of claim 1, wherein the electrical connection (9) between the anode (3) and cathode (4) is stainless steel.

4. The electrochemical cell (1) of claim 1, wherein the anode (3) is made of aluminium.

5. The electrochemical cell (1) of claim 1, wherein the anodes (3) and the cathodes (4) are rectangular, with two long sides and two short sides, arranged so that the long sides are parallel to the flow of the electrolyte.

6. The electrochemical cell (1) of claim 1, wherein the anodes (3), the cathodes (4) and the anode-cathode separators (6) are disc-shaped, the anode-cathode separators (6) comprising a hole through which the electrolyte circulates.

7. The electrochemical cell (1) of claim 1, further comprising a cylindrical casing (11), wherein the electrodes are placed parallel to one another, the cylindrical casing (11) comprising an electrolyte inlet (12) and an electrolyte outlet (13).

8. The electrochemical cell (1) of claim 1, further comprising a compaction element (14), which keeps the electrodes close to each other.
